# EUROPÄISCHE PATENTSCHRIFT

(11) **EP 1 232 214 B1**
(45) Veröffentlichungstag und Bekanntmachung des Hinweises auf die Patenterteilung: **26.11.2003**
(21) Anmeldenummer: 00962421.4
(22) Anmeldetag: 01.09.2000
(51) Int. Cl.: C08L 59/02, C08L 59/00, C08K 3/22

(54) **POLYOXYMETHYLEN MIT VERBESSERTER STABILITÄT GEGEN SÄUREN UND SEINE VERWENDUNG**
POLYOXYMETHYLENE WITH IMPROVED ACID STABILITY AND THE USE THEREOF
POLYOXYMETHYLENE PRESENTANT UNE STABILITE AUX ACIDES AMELIOREE ET SON UTILISATION

(30) Priorität: 09.09.1999 DE 19943178
(43) Veröffentlichungstag der Anmeldung: 21.08.2002
(73) Patentinhaber: Ticona GmbH, 65451 Kelsterbach (DE)
(72) Erfinder: WOERNER, Carsten, 64747 Breuberg (DE); ZIEGLER, Ursula, 55130 Mainz (DE); WITAN, Kurt, 65719 Hofheim (DE); KURZ, Klaus, 65451 Kelsterbach (DE)
(86) Internationale Anmeldenummer: EP0008539
(87) Internationale Veröffentlichungsnummer: WO01018114

(56) Entgegenhaltungen:
- EP-A- 1 057 868
- WO-A-93/13166
- US-A- 5 393 813
- PATENT ABSTRACTS OF JAPAN vol. 1995, no. 11, 26. Dezember 1995 (1995-12-26) & JP 07 228751 A (POLYPLASTICS CO), 29. August 1995 (1995-08-29)

## Beschreibung

Die Erfindung betrifft Polyoxymethylenformmassen und -formteile mit verbesserter Stabilität gegen Säuren, besonders gegen aggressive säurehattige Reiniger, sowie deren Verwendung, besonders im Sanitär- und Weißgerätebereich. Insbesondere wurde gefunden, daß die Säurestabilität von Polyoxymethylen ohne Verschlechterung der mechanischen Eigenschaften erhöht werden kann, wenn zusätzlich zu Polyalkylenglykol und stickstoffhaltigen Costabilisatoren Zinkoxyd in der Polyoxymethylenformmasse enthalten ist. Die Erfindung betrifft auch die Herstellung von Formteilen, die in Kontakt mit aggressiven säurehaltigen Reinigern eingesetzt werden, beispielsweise im Sanitärbereich und Weißgerätebereich.

Polyoxymethylene (POM, Polyacetale) werden aufgrund ihrer hervorragenden mechanischen Eigenschaften und ihrer guten chemischen Beständigkeit seit Jahren auch für viele Anwendungen im Sanitärbereich und Weißgerätebereich eingesetzt. Insbesondere die sehr gute Hydrolysebeständigkeit, die hohe Dimensionsstabilität, das ausgewogene Verhältnis von Steifigkeit zu Zähigkeit und die hervorragende Spannungsrißbeständigkeit prädestinieren diesen Werkstoff für diese Anwendungsfelder.

Seit einiger Zeit ist jedoch bei Haushalts- und Gebäudereinigern zwecks Erreichung einer schnelleren Wirksamkeit der Trend zu aggressiveren säurehaltigen Rezepturen zu beobachten. Insbesondere wenn diese Reiniger nicht durch Abspülen ausreichend entfernt werden, können durch Trocknung und Aufkonzentration hohe Säurekonzentrationen an der Oberfläche von Form-, Funktions- oder sonstigen Bauteilen (im folgenden zusammenfassend als Formteile oder Artikel bezeichnet) auftreten, die zu einer acidolytischen, korrosiven Zerstörung führen können.

Möglichkeiten zur Verbesserung der Säurebeständigkeit von Polyoxymethylenen wurden schon verschiedentlich beschrieben. Üblich ist beispielsweise der Einbau von säurestabilen Endgruppen und von Comonomeren zur Stabilisierung der Polyacetalketten in der POM- Polymermatrix, (Becker/Braun, Kunststoffhandbuch Band 3/1, Hanser Verlag 1992, Seite 300 ff). Eine derartige Stabilisierung reicht für die beschriebenen Anforderungen an die Säurestabilität jedoch längst nicht aus, da die säurekatalysierte hydrolytische Zersetzung von POM an beliebiger Stelle des Polymers erfolgen kann und somit stabilisierte Endgruppen oder Comonomereinheiten keinen umfassenden Schutz bieten.

Der Zusatz von geringen Konzentrationen an Protonenakzeptoren wie Erdalkalisalzen von Carbonsäuren, Erdalkalioxyden oder -hydroxyden, Aminen oder anderen stickstoffhaltigen Verbindungen ist ebenfalls bekannt (Becker/Braun, Kunststoffhandbuch Band 3/1, Hanser Verlag 1992, Seite 300 ff und Gächter/Müller, Kunststoffadditive, 3. Ausgabe, Hanser Verlag 1990, Seite 94 ff). Auch dies reicht für die beschriebene gestiegene Anforderung an die Säurestabilität von Polyoxymethylen nicht aus. Ein Zusatz von höheren Konzentrationen führt aufgrund der Basizität dieser Komponenten nur zu einer starken Verfärbung der POM-Matrix, nicht jedoch zu der angestrebten Säurestabilität.

In der EP-A 595 139 und der EP-A 595 137 sind säurestabilisierende Mischungen aus Melamincyanurat, Alkalisalzen mehrwertiger Säuren, Polyalkylenglykol und thermoplastischem Polyurethan (TPU) beschrieben. Nachteilig wirken sich diese stabilisierende Zusätze durch Verfärbungen, die z.B. durch Alkalisalze entstehen, sowie durch die Abnahme der Steifigkeit bei Zusatz von TPU im dort angegebenen Härtebereich auf das Polyoxymethylen aus.

In der DE-A 44 42 723 wird die Säurestabilisierung von Polyoxymethylenen durch Zusatz von Carbodiimiden beschrieben. Es hat sich jedoch gezeigt, daß die so erhaltene Verbesserung der Säurestabilität für den dauerhaften Einsatz im Kontakt mit hoch aggressiven säurehaltigen Reinigern nicht ausreicht.

Aufgabe der vorliegenden Erfindung war es deshalb, eine Formmasse aus Polyoxymethylen zu finden, die es ermöglicht, daraus Artikel herzustellen, die den erhöhten Anforderungen an die Widerstandsfähigkeit gegenüber Säuren, insbesondere gegenüber aggressiven säurehaltigen Reinigern genügen und gleichzeitig die hervorragenden mechanischen Eigenschaften des Polyoxymethylens behalten.

Die vorliegende Erfindung zeigt einen neuen Weg auf, durch den eine starke Verbesserung der Säurestabilität erreicht wird und gleichzeitig die mechanischen Eigenschaften des Polyacetals erhalten bleiben. Als Additive werden dabei Polyalkylenglykol, stickstoffhaltige Costabilisatoren und Zinkoxyd eingesetzt.

Die Erfindung betrifft somit ein Polyoxymethylen mit verbesserter Stabilität gegen Säuren, enthaltend
(A) 84 bis 99,79 Gew.-% mindestens eines Polyoxymethylenhomo- oder copolymerisats
(B) 0,1 bis 5 Gew.-% mindestens eines Polyalkylenglykols
(C) 0,1 bis 10 Gew.-% eines Zinkoxyds
(D) 0,01 bis 1 Gew.-% eines oder mehrerer stickstoffhaltiger Costabilisatoren,
wobei die Summe der Gewichtsprozente der Komponenten (A) bis (D) jeweils 100% ergibt.

Die Erfindung betrifft entsprechend auch die Verwendung von
(B) 0,1 bis 5 Gew.-% mindestens eines Polyalkylenglykols,
(C) 0,1 bis 10 Gew.-% Zinkoxyd und
(D) 0,01 bis 1 Gew.-% eines oder mehrerer stickstoffhaltiger Costabilisatoren auf 84 bis 99,79 Gew.-% mindestens eines Polyoxymethylenhomo- oder copolymerisats (A), wobei die Summe der Gewichtsprozente der Komponenten (A) bis (D) 100% ergibt, zur Verbesserung der Säurestabilität des Polyoxymethylenhomo- oder copolymerisats oder daraus hergestellter Formteile.

Die Erfindung betrifft zudem die Verwendung des erfindungsgemäßen Polyoxymethylens zur Herstellung von Formteilen für Anwendungen mit direktem Kontakt zu aggressiven Säuren, insbesondere zu aggressiven säurehaltigen Reinigern.

Überraschend wurde festgestellt, daß durch die Zugabe von Polyalkylenglykol, stickstoffhaltigen Costabilisatoren und Zinkoxyd in den genannten Anteilen der Gewichtsabbau von Polyoxymethylenformteilen in Säure/Tensid-Mischungen stark reduziert wird wobei gleichzeitig der Erhalt der mechanischen Eigenschaften stark verbessert werden kann. Liegt dagegen die Dosierung der Komponenten B-D unterhalb der genannten Bereiche, bleibt die erzielte Stabilität unzureichend, während bei einer Überdosierung die mechanischen Eigenschaften der erhaltenen Formteile in Mitleidenschaft gezogen werden.

Gemäß der Erfindung werden als Basispolymere (Komponente A) die bekannten Polyoxymethylene eingesetzt, wie sie beispielsweise in der DE-A 2 947 490 beschrieben sind. Es handelt sich hierbei im wesentlichen um unverzweigte lineare Polymere, die in der Regel mindestens 80 Mol-%, vorzugsweise mindestens 90 Mol-% Oxymethyleneinheiten (-CH₂O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung. Copolymere sind Polymere aus Formaldehyd oder seinen cyclischen Oligomeren, insbesondere Trioxan, und cyclischen Ethern, cyclischen Acetalen und/oder linearen Polyacetalen.

Als Comonomere kommen vor allem cyclische Ether mit 3, 4 oder 5, vorzugsweise 3 Ringgliedern, von Trioxan verschiedene cyclische Acetale mit 5 bis 11, vorzugsweise 5, 6, 7 oder 8 Ringgliedern und lineare Polyacetale in Frage. Der Anteil der Cokomponenten am Polymeren beträgt im allgemeinen 0,1 bis 20 Mol-%, vorzugsweise 0,5 bis 10 Mol-%. Am besten eignen sich Copolymere aus 95 bis 99,5 Mol-% Trioxan und 0,5 bis 5 Mol-% einer der vorgenannten Cokomponenten.

Der Anteil des Polyoxymethylens an der erfindungsgemäßen Mischung beträgt vorzugsweise 94 bis 99 Gew.-%.

Das Polyalkylenglykol (Komponente B) hat vorzugsweise eine mittlere molare Masse von 1000 bis 45000, insbesondere von 5000 bis 40000. Sein Anteil an der Mischung beträgt vorzugsweise 0,5 bis 5 Gew.-%, besonders bevorzugt 1 bis 3 Gew.-%. Bevorzugte Polyalkylenglykole sind Polyethylenglykol und Polypropylenglykol, besonders bevorzugt ist Polyethylenglykol.

Der Anteil des Zinkoxyds (Komponente C) an der Mischung beträgt vorzugsweise 0,5 bis 5 Gew.-% und besonders bevorzugt 0,5 bis 3 Gew.-%.

Die stickstoffhaltigen Costabilisatoren (Komponente D) werden aus der Gruppe der für Polyacetale üblichen Amino-, Amid-, Hydrazin- und Harnstoff-Costabilisatoren ausgewählt. Diese können einzeln oder auch in untereinander kombinierter Form verwendet werden. Auch gehinderte Amine können zum Einsatz kommen. Besonders bevorzugt wird jedoch Melamin. Der Anteil der stickstoffhaltigen Costabilisatoren beträgt vorzugsweise 0,03 bis 0,3 Gew.-%.

Die erfindungsgemäße Mischung kann in den erforderlichen Mengen weitere Zusatzstoffe, wie Antioxidantien, insbesondere gehinderte phenolische Verbindungen, übliche basische Costabilisatoren wie Erdalkalisalze von Carbonsäuren, Erdalkalioxyde oder -Hydroxyde, Nukleierungsmittel, Antistatika, Lichtschutzmittel, Gleit- und Schmiermittel, Weichmacher, Pigmente, Farbstoffe, optische Aufheller, Verarbeitungshilfsmittel und dergleichen enthalten. Der Zusatz von Alkalisalzen von Carbonsäuren ist aus den vorgenannten Gründen nicht zu empfehlen.

Die Zusatzstoffe werden für gewöhnlich in einer Menge von insgesamt 0,1 bis 5 Gew.-%, insbesondere in Mengen von 0,5 bis 3 Gew.-% bezogen auf die gesamte Formmasse eingesetzt. Je nach Zusammensetzung können aber auch hiervon abweichende Mengen erforderlich sein.

Die erfindungsgemäße Mischung kann auch allgemein übliche polymere Zusätze enthalten. Zur Verbesserung der Schlagzähigkeit oder der Gleit-/Reibeigenschaften können beispielsweise Thermoplastische Polyurethan-Elastomere, gepfropfte Polybutadien- oder Acrylat- Core-Shell-Modifikatoren, Polytetrafluorethylen, Polyethylen, ultrahochmolekulares Polyethylen oder gepfropftes Polyethylen enthalten sein. Die Gesamtmenge an diesen polymeren Zusätzen beträgt gewöhnlich bis zu 40 Gew.-%, vorzugsweise bis zu 30 Gew.-%, bezogen auf die Gesamtmischung.

Weiterhin kann die erfindungsgemäße Mischung auch Füll- und Verstärkungsstoffe enthalten. Hierbei kann es sich u.a. um faserförmige Verstärkungsmaterialien wie Glasfasern, Kohlenstoffasern etc. sowie nicht faserige Füllstoffe wie Glaspulver, Graphit, Ruß, Metallpulver, Metalloxide, Silikate, Carbonate und Molybdän (IV)-Sulfid handeln. Diese Füllstoffe können mit einem Haftvermittler bzw. Haftvermittlersystem ausgerüstet sein. Die Gesamtmenge an Füll- und/oder Verstärkungsstoffen beträgt gewöhnlich bis zu 50 Gew.-%, vorzugsweise bis zu 40 Gew.-%, bezogen auf die Gesamtmischung.

Die Herstellung der erfindungsgemäßen Mischungen kann nach den allgemein üblichen und bekannten Verfahren erfolgen, beispielsweise durch intensives Mischen der Bestandteile bei erhöhter Temperatur, d.h. im allgemeinen bei Temperaturen oberhalb des Schmelzpunktes der Komponente A, also bei etwa 160 bis 250 °C, vorzugsweise zwischen 180 und 220 °C in gut mischenden Aggregaten wie Knetern oder Extrudern, vorteilhaft in Zweischneckenextrudern. Üblicherweise werden die pulverförmigen Komponenten zunächst bei Raumtemperatur mechanisch gemischt und anschließend zur vollständigen Homogenisierung aufgeschmolzen.

Bei der Verwendung von Zusatz-, Füll- und Verstärkungsstoffen kann es aber auch vorteilhaft sein, Masterbatches oder Konzentrate davon einzusetzen. Faserförmige Materialien können beispielsweise auch als Endlosmaterial dem Mischaggregat, insbesondere dem Extruder, zugeführt werden.

Das erfindungsgemäße Polyoxymethylen zeichnet sich durch ein ausgewogenes Eigenschaftsspektrum aus. Daraus hergestellte Formteile sind besonders für den Einsatz im Kontakt mit aggressiven Säuren und aggressiven säurehaltigen Reinigern geeignet. Im Vergleich zu POM-Formmassen, die keine oder nur eine der Komponenten (B) bis (D) beinhalten, sind die erfindungsgemäßen Formmassen sowohl durch einen geringen chemischen Abbau als auch durch einen geringen Verlust mechanischer Eigenschaften insbesondere nach Kontakt mit aggressiven säurehaltigen Reinigern gekennzeichnet.

Zu den möglichen Anwendungsgebieten zählen insbesondere Armaturen, Perlatoren, Entlüftungsventile und Funktionsteile in Spülmaschinen, die überwiegend aus technischen Kunststoffen hergestellt sind. Die Bauteilkomponenten aus Kunststoff kommen dabei direkt oder indirekt über die sogenannte Kapillarwirkung mit den aggressiven Medien in Berührung und können je nach Umgebungsbedingungen relativ schnell geschädigt werden, so daß ihre Funktion nachhaltig gestört wird.

Bei den Armaturen handelt es sich beispielsweise um Mischkartuschen in Einhandhebelmischern (Wasserhahn), wie sie heute meistens in Bädern oder Toiletten eingesetzt werden. Diese zylindrischen Bauteile ermöglichen eine exakte Temperatureinstellung des Wassers, indem der Kalt- bzw. Warmwasserzulauf reguliert wird.

Pertatoren sind sehr filigrane Strahlformer, die bei modernen Wasserhähnen und Brauseköpfen dafür sorgen, daß der austretende Wasserstrahl genügend durchlüftet wird und dadurch seinen mousseusen Charakter bekommt und nicht spritzt. Der Perlator ist in der Regel das letzte Bauteil in der Trinkwasserkette.

Entlüftungsventile kommen in geschlossenen Wasserkreisläufen zum Einsatz, um bei Bedarf Luftvolumen aus dem Leitungssystem zu entfernen. Insbesondere bei Systemenen mit chloriertem Wasser können hierbei nur dauerhaft beständige Kunststoffe eingesetzt werden.

Bei den Spülmaschinenfunktionsteilen kann es sich beispielsweise um Überwurfmuttern zur Fixierung der rotierenden Sprüharme, um Siebsysteme wie Klarspülersieb, Ablaufsieb etc., oder um die Rollen von Spülkästen, die die Beweglichkeit dieser verschiebbaren Einsätze auch unter Last sicherstellen, handeln.

### Beispiele

Für die erfindungsgemäßen Beispiele 5 und 8 sowie für die Vergleichsbeispiele 1 bis 4, 6 und 7 wurden folgende Komponenten eingesetzt:
- Komponente A: Polyoxymethylencopolymerisat aus 96,6 Gew.-% Trioxan und 3,4 Gew.-% Dioxolan, stabilisiert mit 0,3 Gew.-% phenolischem Antioxidans und 0,2 Gew.-% Tricalciumcitrat. Die Schmelzvolumenrate betrug 8,0 cm³/10 min. (190 °C, 2,16 kg Auflagegewicht nach ISO 1133).
- Komponente B: Polyethylenglykol 12000 P der Firma Clariant GmbH; Polyethylenglykol mit mittlerer molarer Masse von 12000.
- Komponente C:: Zinkoxyd aktiv® der Bayer AG.
- Komponente D1:: Melamin, technisch reine Qualität.
- Komponente D2:: Melamincyanurat, technisch reine Qualität.
- Komponente D3:: Tinuvin 770® gehindertes Amin der Ciba Spezialitätenchemie.

Das POM-Copolymerisat (A) wurde mit den entsprechenden Gewichtsteilen der Komponenten (B)-(D) gemäß Tabellen 1 und 2 gemischt und in einem Doppelschneckenextruder ZE 25 x 33 D (Firma Berstorff, Hannover, Bundesrepublik Deutschland) bei einer Massetemperatur von 200 °C aufgeschmolzen und anschließend granuliert.

Das Granulat wurde 16 Stunden bei 80 °C getrocknet und anschließend zu ISO ¼-Zugstäben (in früherer ISO 527) als Probekörper für die Beständigkeitsversuche und mechanischen Prüfungen gespritzt. Die Verarbeitungsbedingungen wurden nach den Empfehlungen der ISO 9988-2, Stoff-Norm für POM, gewählt. Die Verwendung von ISO ¼-Zugstäben, die nur 1 mm Dicke aufweisen, im Vergleich zu Zugstab Typ 1A (ISO 527-1,2) mit 4 mm Dicke, ist damit begründet, daß bei kleineren Abmessungen der Probekörper ein deutlich größerer Meßeffekt für den Materialabbau und die mechanischen Eigenschaften gefunden wird.

### Lagerungen und Messungen:

Vor der Lagerung wurden je fünf Prüfkörper zur Bestimmung des Ausgangsgewichtes gewogen. Fünf weitere Prüfkörper wurden als Nullprobe zur Bestimmung der mechanischen Ausgangseigenschaften im Zugversuch nach ISO 527 mit einer Zuggeschwindigkeit von 12,5 mm/min getestet.

Die gewogenen Probekörper wurden frei hängend vollständig in eine wässerige Lösung aus 10 Gew.-% Phosphorsäure und 1 Gew.-% Mersolat H 40® (ionisches Tensid der Bayer AG) bei den Beispielen 1 bis 5, bzw. 10 Gew.-% Amidosulfonsäure und 1 Gew.-% Mersolat H 40® bei den Beispielen 6 bis 8 getaucht. Nach etwa 20 Sekunden wurden die Proben herausgezogen und ohne Abwischen der anhaftenden Säure/Tensid-Lösung frei hängend für 24 Stunden in einer klimatisierten Umgebung bei 23°C und einer relativen Luftfeuchtigkeit von ca. 30 % gelagert. Nach diesen 24 Stunden wurden dieselben Probekörper erneut für etwa 20 Sekunden in die Säure/Tensid-Lösung getaucht und danach wiederum wie beschrieben ohne Abwischen für 24 Stunden gelagert. Dieser Tauchzyklus wurde an insgesamt fünf hintereinander folgenden Tagen durchgeführt. Im Anschluß daran wurden die so behandelten Proben für weitere 9 Tage hängend in der klimatisierten Umgebung gelagert. Nach diesen insgesamt 14 Tagen Einwirken der aufkonzentrierten Säure/Tensid-Lösung wurden die 5 Probekörper vorsichtig abgewischt und wiederum gewogen. Die relative Gewichtsdifferenz in Bezug zum Ausgangsgewicht wurde bestimmt. Anschließend wurde mit den gelagerten Proben ein Zugversuch nach ISO 527 mit einer Zuggeschwindigkeit von 12,5 mm/min durchgeführt.

Tabelle 1 enthält die Zusammensetzung der Materialien mit den entsprechenden Prüfergebnissen für Tauchversuche in einer Lösung aus 10 Gew.-% Phosphorsäure und 1 Gew.-% Mersolat H 40®.

| Tabelle 1 | Vergleichsbeispiel 1 | Vergleichsbeispiel 2 | Vergleichsbeispiel 3 | Vergleichsbeispiel 4 | Beispiel 5 |
|---|---|---|---|---|---|
| Komponente A [Gew.-%] | 100 | 99,8 | 97,8 | 97,0 | 96,9 |
| Komponente B [Gew.-%] | - | - | 2,0 | 2,0 | 2,0 |
| Komponente C [Gew.-%] | - | - | - | - | 1,0 |
| Komponente D1 [Gew.-%] | - | 0,2 | 0,2 | - | 0,1 |
| Komponente D2 [Gew.-%] | - | - | - | 1,0 | - |
| Rel. Gewichtsdifferenz [%] | - 41,3 | -28,4 | -15,9 | -17,1 | -13,1 |
| Bruchdehnung vor Lagerung [%] | 72,9 | 69,4 | 70,4 | 46,3 | 72,7 |
| Bruchdehnung nach Tauchversuch [%] | 4,3 | 7,0 | 32,2 | 23,2 | 48,3 |

Durch Zugabe der Komponenten B, C und D im angegebenen Konzentrationsbereich wird der Materialabbau wesentlich verringert. Die besten Ergebnisse unter möglichst geringem Verlust an Bruchdehnung und geringem Materialabbau werden mit einer erfindungsgemäßen Kombination der Komponenten B, C und D1 erzielt.

Bei den gewählten Tauchversuchsbedingungen wird die Gewichtsänderung auf etwa 1/3 des ursprünglichen Wertes (bei 100 Gew.-% A) reduziert, der relative Verlust an Bruchdehnung durch den Tauchversuch wird von über 90 % auf etwa 30 % reduziert. Die Ausgangsdehnung ist beim erfindungsgemäßen Beispiel 5 gegenüber dem unmodifizierten Material (Vergleichsbeispiel 1) nahezu unverändert.

Tabelle 2 enthält die Zusammensetzung der Materialien mit den entsprechenden Prüfergebnissen für Tauchversuche in einer Lösung aus 10 Gew.-% Amidosulfonsäure und 1 Gew.-% Mersolat H 40®.

| Tabelle 2 | Vergleichsbeispiel 6 | Vergleichsbeispiel 7 | Beispiel 8 |
|---|---|---|---|
| Komponente A [Gew.-%] | 100 | 98,7 | 96,9 |
| Komponente B [Gew.-%] | - | 1,0 | 2,0 |
| Komponente C [Gew.-%] | - | - | 1,0 |
| Komponente D1 [Gew.-%] | - | 0,1 | 0,1 |
| Komponente D3 [Gew.-%] | - | 0,2 | - |
| Rel. Gewichtsdifferenz [%] | - 33,7 | -19,6 | -14,4 |
| Bruchdehnung vor Lagerung [%] | 72,9 | 85,4 | 72,7 |
| Bruchdehnung nach Tauchversuch [%] | 0,1 | 4,6 | 20,7 |

Durch Zugabe der Komponenten B, C und D im angegebenen Konzentrationsbereich wird der Materialabbau wesentlich verringert. Die besten Ergebnisse unter möglichst geringem Verlust an Bruchdehnung und geringem Materialabbau werden mit einer erfindungsgemäßen Kombination der Komponenten B, C und D1 erzielt.

Bei den gewählten Tauchversuchsbedingungen wird die Gewichtsänderung auf weniger als die Hälfte des ursprünglichen Wertes (bei 100 Gew.-% A) reduziert, der nahezu vollständige Verlust an Bruchdehnung durch den Tauchversuch wird deutlich reduziert. Die Ausgangsdehnung ist beim erfindungsgemäßen Beispiel 8 gegenüber dem unmodifizierten Material (Vergleichsbeispiel 6) nahezu unverändert.

## Patentansprüche

1. Polyoxymethylen mit verbesserter Stabilität gegen Säuren, enthaltend
A 84 bis 99,79 Gew.-% mindestens eines Polyoxymethylenhomo- oder copolymerisats,
B 0,1 bis 5 Gew.-% mindestens eines Polyalkylenglykols,
C 0,1 bis 10 Gew.-% Zinkoxyd und
D 0,01 bis 1 Gew.-% eines oder mehrerer stickstoffhaltiger Costabilisatoren, wobei die Summe der Gewichtsprozente der Komponenten A bis D 100% ergibt.

2. Polyoxymethylen nach Anspruch 1, **dadurch gekennzeichnet, daß** der Anteil an Polyalkylenglykol 0,5 bis 5 Gew.-% beträgt.

3. Polyoxymethylen nach Anspruch 1 oder 2, **dadurch gekennzeichnet, daß** der Anteil an Zinkoxyd 0,5 bis 5 Gew.-% beträgt.

4. Polyoxymethylen nach einem der Ansprüche 1 bis 3, **dadurch gekennzeichnet, daß** als stickstoffhaltiger Costabilisator mindestens eine Amino-, Amid-, Hydrazinoder Hamstoffverbindung oder ein gehindertes Amin, vorzugsweise Melamin eingesetzt wird.

5. Polyoxymethylen nach einem der Ansprüche 1 bis 4, **dadurch gekennzeichnet, daß** der Anteil stickstoffhaltiger Costabilisatoren 0,03 bis 0,3 Gew.-% beträgt.

6. Polyoxymethylen nach einem der Ansprüche 1 bis 5, **dadurch gekennzeichnet, daß** bei Probekörpern in Form von 1 mm dicken ISO ¼-Zugstäben, hergestellt aus einem Granulat erhalten durch Aufschmelzen und Granulieren einer Mischung aus den Komponenten A-D, die fünf Tage hintereinander jeweils 20 Sekunden lang vollständig in eine wässerige Lösung aus 10 Gew.-% Phosphorsäure und 1 Gew.-% Mersolat H 40® getaucht, anschließend herausgezogen und ohne Abwischen der anhaftenden Säure/Tensid-Lösung frei hängend für 24 Stunden in einer klimatisierten Umgebung bei 23°C und einer relativen Luftfeuchtigkeit von ca. 30 % gelagert wurden und anschließend für weitere 9 Tage hängend in der klimatisierten Umgebung gelagert wurden, die relative Gewichtsdifferenz im Vergleich zu Prüfstäben, die auf die gleiche Weise hergestellt aber nicht der Säure/Tensid-Lösung ausgesetzt wurden, weniger als 15 % beträgt.

7. Polyoxymethylen nach Anspruch 6, **dadurch gekennzeichnet, daß** die relative Gewichtsänderung der Prüfkörper aus den Komponenten A-D ein Drittel oder weniger der relativen Gewichtsänderung ermittelt an Prüfkörpern aus 100 Gew.-% der Komponente A beträgt.

8. Verwendung eines Polyoxymethylens nach einem der Ansprüche 1 bis 7 zur Herstellung von Formteilen für den Einsatz im Kontakt mit aggressiven Säuren und aggressiven säurehaltigen Reinigern.

9. Verwendung von Formteilen aus einem Polyoxymethylen nach einem der Ansprüche 1 bis 7 für Anwendungen im Sanitär- und Weißgerätebereich.

10. Verwendung von
B 0,1 bis 5 Gew.-% mindestens eines Polyalkylenglykols,
C 0,1 bis 10 Gew.-% Zinkoxyd und
D 0,01 bis 1 Gew.-% eines oder mehrerer stickstoffhaltiger Costabilisatoren auf 84 bis 99,79 Gew.-% mindestens eines Polyoxymethylenhomo- oder copolymerisats (A), wobei die Summe der Gewichtsprozente der Komponenten A bis D 100% ergibt, zur Verbesserung der Säurestabilität des Polyoxymethylenhomo- oder copolymerisats oder daraus hergestellter Formteile.

## Claims

1. A polyoxymethylene with improved resistance to acids, comprising
A from 84 to 99.79% by weight of at least one polyoxymethylene homo- or copolymer,
B from 0.1 to 5% by weight of at least one polyalkylene glycol,
C from 0.1 to 10% by weight of zinc oxide, and
D from 0.01 to 1% by weight of one or more nitrogen-containing costabilizers,
where the total of the percentages by weight of components A to D is 100%.

2. A polyoxymethylene as claimed in claim 1, wherein the proportion of polyalkylene glycol is from 0.5 to 5% by weight.

3. A polyoxymethylene as claimed in claim 1 or 2, wherein the proportion of zinc oxide is from 0.5 to 5% by weight.

4. A polyoxymethylene as claimed in any of claims 1 to 3, wherein the nitrogen-containing costabilizer used comprises at least one amino compound, amide compound, hydrazine compound or urea compound or a hindered amine, preferably melamine.

5. A polyoxymethylene as claimed in any of claims 1 to 4, wherein the proportion of nitrogen-containing costabilizers is from 0.03 to 0.3% by weight.

6. A polyoxymethylene as claimed in any of claims 1 to 5, wherein test specimens in the form of ISO ¼ tensile specimens of thickness 1 mm produced from pellets obtained by melting and pelletizing a mixture made from components A to D, which on each of five days in succession were fully immersed for 20 seconds in an aqueous solution made from 10% by weight of phosphoric acid and 1% by weight of Mersolat H 40®, were then removed and, without wiping off any adhering acid/surfactant solution, aged freely suspended for 24 hours in an environment with controlled temperature and humidity, at 23°C and a relative humidity of about 30%, and then aged for a further 9 days suspended in the environment with controlled temperature and humidity, show a relative weight difference of less than 15% compared with test specimens produced in the same way but not exposed to the acid/surfactant solution.

7. A polyoxymethylene as claimed in claim 6, wherein the relative change in weight of the test specimens made from components A to D is one third or less of the relative change in weight determined on test specimens made from 100% by weight of component A.

8. The use of a polyoxymethylene as claimed in any of claims 1 to 7 for producing moldings for use in contact with aggressive acids or with aggressive acid-containing cleaning agents.

9. The use of moldings made from a polyoxymethylene as claimed in any of claims 1 to 7 for applications in the sanitary sector or the white goods sector.

10. The use of
B from 0.1 to 5% by weight of at least one polyalkylene glycol,
C from 0.1 to 10% by weight of zinc oxide, and
D from 0.01 to 1% by weight of one or more nitrogen-containing costabilizers,
with from 84 to 99.79% by weight of at least one polyoxymethylene homo- or copolymer (A), where the total of the percentages by weight of components A to D is 100%, for improving the acid resistance of the polyoxymethylene homo- or copolymer, or of moldings produced therefrom.

## Revendications

1. Polyoxyméthylène avec une stabilité améliorée par rapport aux acides, contenant
A 84 à 99,79% en poids d'au moins un homopolymère ou copolymère de polyoxyméthylène
B 0,1 à 5% en poids d'au moins un polyalkylèneglycol
C 0,1 à 10% en poids d'oxyde de zinc et
D 0,01 à 1% en poids d'un ou de plusieurs costabilisateurs contenant de l'azote, la somme des pour-cent en poids des composants A à D étant égale à 100%.

2. Polyoxyméthylène selon la revendication 1, **caractérisé en ce que** la proportion en polyalkylèneglycol est de 0,5 à 5% en poids.

3. Polyoxyméthylène selon la revendication 1 ou 2, **caractérisé en ce que** la proportion d'oxyde de zinc est de 0,5 à 5% en poids.

4. Polyoxyméthylène selon l'une quelconque des revendications 1 à 3, **caractérisé en ce qu'**on utilise comme costabilisateur contenant de l'azote au moins un composé amino, amide, hydrazine ou urée ou une amine stériquement encombrée, de préférence la mélamine.

5. Polyoxyméthylène selon l'une quelconque des revendications 1 à 4, **caractérisé en ce que** la proportion de costabilisateurs contenant de l'azote est de 0,03 à 0,3% en poids.

6. Polyoxyméthylène selon l'une quelconque des revendications 1 à 5, **caractérisé en ce que**, dans le cas d'éprouvettes sous forme de barres de traction ISO 1/4 d'une épaisseur de 1 mm, préparées à partir d'un granulat obtenu par fusion et granulation d'un mélange des composants A à D, immergées complètement pendant cinq jours consécutifs à chaque fois pendant 20 secondes dans une solution aqueuse de 10% en poids d'acide phosphorique et de 1% en poids de Mersolat H 40®, ensuite enlevées et entreposées sans essuyer la solution adhérente acide/tensioactif, en les suspendant librement pendant 24 heures dans un environnement climatisé à 23°C et une humidité relative d'environ 30% et entreposées ensuite en les suspendant pendant encore 9 jours dans l'environnement climatisé, la différence pondérale relative par rapport à des éprouvettes qui ont été préparées de la même manière mais qui n'ont pas été soumises à la solution acide/tensioactif, est inférieure à 15%.

7. Polyoxyméthylène selon la revendication 6, **caractérisé en ce que** la modification pondérale relative des éprouvettes réalisées à partir des composants A-D est d'un tiers ou moins par rapport à la modification pondérale relative déterminée sur des éprouvettes réalisées à partir de 100% du composant A.

8. Utilisation d'un polyoxyméthylène selon l'une quelconque des revendications 1 à 7 pour la fabrication de pièces façonnées pour une utilisation en contact avec des acides agressifs et des agents de nettoyage agressifs contenant un acide.

9. Utilisation de pièces façonnées en polyoxyméthylène selon l'une quelconque des revendications 1 à 7 pour des utilisations dans le domaine sanitaire et des gros appareils électroménagers.

10. Utilisation de
B 0,1 à 5% en poids d'au moins un polyalkylèneglycol
C 0,1 à 10% en poids d'oxyde de zinc et
D 0,01 à 1% en poids d'un ou de plusieurs costabilisateurs contenant de l'azote par rapport à 84 jusqu'à 99,79% en poids d'au moins un homopolymère ou copolymère de polyoxyméthylène (A), la somme des pour-cent en poids des composants A à D étant égale à 100%, pour améliorer la stabilité aux acides de l'homopolymère ou du copolymère de polyoxyméthylène ou des pièces façonnées fabriquées à partir de ceux-ci.
